# EUROPÄISCHE PATENTSCHRIFT

(11) **EP 2 865 618 B1**
(45) Veröffentlichungstag und Bekanntmachung des Hinweises auf die Patenterteilung: **30.12.2015**
(21) Anmeldenummer: 13190537.4
(22) Anmeldetag: 28.10.2013
(51) Int. Cl.: B65G 47/84, B65G 47/08, B65B 35/50

(54) **Vorrichtung zur Übergabe von Blisterpackungsstapeln**
Apparatus for transferring stacks of blister packages
Dispositif pour transférer des piles d' emballages blister

(43) Veröffentlichungstag der Anmeldung: 29.04.2015
(73) Patentinhaber: Uhlmann Pac-Systeme GmbH & Co. KG, 88471 Laupheim (DE)
(72) Erfinder: Rodi, Wolfgang, 88471 Laupheim / Baustetten (DE); Fochler, Fritz, 89358 Kammeltal-Behlingen (DE)
(74) Vertreter: Wächter, Jochen

(56) Entgegenhaltungen:
- EP-A1- 1 602 584
- WO-A1-2006/015656
- DE-A1- 2 001 742
- US-A- 5 331 790

## Beschreibung

Die vorliegende Erfindung betrifft eine Vorrichtung zur Übergabe von Blisterpackungsstapeln an eine Fördervorrichtung.

Blisterpackungen werden häufig in der pharmazeutischen Industrie bei der Verpackung von Medikamenten verwendet. Hierbei wird zunächst in einer Folienmaterialbahn eine Vielzahl von Näpfen gebildet, in welche Produkte, wie etwa Dragees oder Tabletten, eingebracht werden. Anschließend wird die Folienmaterialbahn mit den gefüllten Näpfen mit einer Deckfolie versiegelt und einer Stanzstation zugeführt, in der die jeweiligen Blisterpackungen aus der Folienmaterialbahn ausgestanzt werden.

Danach werden die Blisterpackungen in Stapeln in jeweiligen Fächern einer Packgutförderkette abgelegt. Abschließend werden die an der Fördervorrichtung angeordneten Blisterpackungsstapel einer Verpackungsstation zugeführt, in der die Blisterpackungsstapel in entsprechende Verpackungen, wie etwa Faltschachteln, eingebracht werden.

Zur Erreichung eines möglichst hohen Durchsatzes der Verpackungsmaschine wird die Packgutförderkette vorzugsweise kontinuierlich betrieben. Insofern benötigt man bei der Übergabe der Blisterpackungen oder Blisterpackungsstapel von der Stanze in die Packgutförderkette der Verpackungsmaschine entsprechende Übergabevorrichtungen.

Bei einer bekannten Übergabevorrichtung gemäß DE 100 48 007 A1 wird ein Blisterpackungsstapel zunächst von einem Schiebeelement hintergriffen, das an einem Endlosförderer angebracht ist. Der Blisterpackungsstapel wird dann entlang einer Gleitfläche in Richtung auf die Fördervorrichtung vorgeschoben. Zusätzlich zu dem Schiebeelement ist ein Begrenzungselement vorgesehen, das ebenfalls an einem umlaufenden Endlosförderer angebracht ist, der in einer entgegengesetzten Drehrichtung betrieben wird.

Bei einer anderen bekannten Übergabevorrichtung zur Übergabe von Blisterpackungsstapeln gemäß EP 1 225 140 A1 werden die Blisterpackungen in einem Abgabeschacht gestapelt, der über der Packguttransportkette angeordnet ist. Zur Übergabe der Blisterpackungsstapel werden die Blisterpackungsstapel aus dem Abgabeschacht vertikal nach unten in jeweilige Aufnahmen der Fördervorrichtung fallengelassen

In der gattungsgemässen Übergabevorrichtung gemäß US 5 331 790 A werden Beutel von einem ersten Förderband auf ein zweites Förderband übergeben. Die Vorrichtung umfasst Übergabekassetten, die einen Boden und zwei gegenüberliegende Seiten aufweisen. Die zu übergebenden Beutel werden in einer Aufnahmeposition aufgenommen und in einer Richtung quer zu einer Förderrichtung in eine Abgabeposition bewegt.

Der Erfindung liegt die Aufgabe zugrunde, eine verbesserte Vorrichtung zur Übergabe von Blisterpackungsstapeln an eine sich umlaufend bewegende Fördervorrichtung zu schaffen, bei der die Übergabe von Blisterpackungsstapeln effizienter und zuverlässiger erfolgt.

Diese Aufgabe wird durch die Merkmale des Anspruchs 1 gelöst.

Erfindungsgemäß wird eine Vorrichtung mit Übergabevorrichtung und Fördervorrichtung vorgeschlagen, wobei die Übergabevorrichtung zur Übergabe von Blisterpackungsstapel an die Fördervorrichtung dient, und wobei die Fördervorrichtung mehrere sich umlaufend bewegende Fächer oder Wagen zur Aufnahme der Blisterpackungsstapel hat und zum Fördern der Blisterpackungsstapel in einer Förderrichtung dient. Die Übergabevorrichtung umfasst wenigstens eine Übergabekassette zum Aufnehmen eines Blisterpäckurigsstapels, die ein Bodenelement und wenigstens zwei gegenüberliegende Seitenbegrenzungselemente aufweist, und wenigstens eine Übergabekassetten-Bewegungseinheit zum Bewegen der Übergabekassette in Förderrichtung sowie in einer Richtung quer zur Förderrichtung, die von einer Steuervorrichtung angesteuert ist. Die Übergabekassetten-Bewegungseinheit ist derart angesteuert, dass die Übergabekassette von einer Aufnahmeposition, an der sie mit Blisterpackungen gefüllt wird, vorzugsweise translatorisch und vorzugsweise in Förderrichtung zu einer Abgabeposition, an der die Blisterpackungen in ein Fach oder einen Wagen der Fördervorrichtung übergeben werden, bewegt wird, und die Übergabekassette von der Abgabeposition quer zur Förderrichtung aus dem Fach oder dem Wagen der Fördervorrichtung seitlich herausbewegt wird, während der Blisterpackungsstapel auf der Fördervorrichtung verbleibt.

Da sich der Blisterpackungsstapel während der Bewegung in Förderrichtung zwischen den Seitenbegrenzungselementen der Übergabekassette befindet, können die Blisterpackungsstapel bis zum Zeitpunkt der Übergabe an ein Fach oder einen Wagen in vertikal stabiler Lage bewegt werden. Nach dem seitlichen Herausbewegen der Übergabekassette verbleiben die Blisterpackungsstapel wiederum in dem Fach oder dem Wagen der Fördervorrichtung, so dass eine stabile Lage weiterhin sichergestellt ist.

Vorzugsweise ist ein Anschlagelement vorgesehen, gegen das der Blisterpackungsstapel anliegt, um diesen in dem Fach oder dem Wagen der Fördervorrichtung zurückzuhalten, wenn die Übergabekassette seitlich aus der Fördervorrichtung herausbewegt wird. Dadurch kann die Übergabekassette zuverlässig unter dem Blisterpackungsstapel herausgezogen werden, während das Anschlagelement zusätzlich für eine bündige vertikale Ausrichtung und Stabilisierung des Blisterpackungsstapels sorgt.

In besonderer Ausgestaltung ist das Anschlagelement als bewegbares Schiebeelement ausgebildet, das an der Übergabekassetten-Bewegungseinheit angeordnet ist. Hierdurch ist es möglich, die relative Position des Anschlagelements bezüglich der Übergabekassette an der Übergabekassetten-Bewegungseinheit so einzustellen, dass der Blisterpackungsstapel nach dem Herausziehen der Übergabekassette zuverlässig in einer exakten, vordefinierten Position in der Fördervorrichtung verbleibt.

Mit Vorteil ist die Übergabekassetten-Bewegungseinheit derart angesteuert, dass die Übergabekassette bei der Bewegung von der Aufnahmeposition zur Abgabeposition in Förderrichtung der Fördervorrichtung bewegt wird. Hierbei wird die Übergabekassette mit dem darauf angeordneten Blisterpackungsstapel in vorteilhafter Weise noch vor dem Herausziehen aus dem Fach oder dem Wagen auf die Geschwindigkeit der Fördervorrichtung gebracht und mit dieser mitbewegt. Dementsprechend wird eine sanfte und zuverlässige Übergabe des Blisterpackungsstapels an die Fördervorrichtung begünstigt.

Weiterhin ist es von Vorteil, wenn die Übergabenkassetten-Bewegungseinheit derart ausgestaltet ist, dass die Übergabekassette nach dem Herausbewegen aus dem Fach oder dem Wagen quer zur Förderrichtung zunächst in einer zur Förderrichtung entgegengesetzten Richtung bewegt wird und anschließend in Richtung quer zur Förderrichtung in die Aufnahmeposition bewegt wird. Durch die Bewegung der Übergabekassette von der Aufnahmeposition zur Übergabeposition und zurück zur Aufnahmeposition resultiert eine umlaufende Endlosbewegung, die technisch einfach realisierbar ist.

Bei der Bewegung zum seitlichen Herausziehen der Übergabekassette aus der Fördervorrichtung handelt es sich um eine kombinierte Bewegung, die sich aus der Bewegung in Förderrichtung und aus der Bewegung quer zur Förderrichtung zusammensetzt. Der Vorteil besteht darin, dass während des Herausziehens der Übergabekassette die Übergabekassette selbst noch in Förderrichtung mitgeführt wird, womit eine nahtlose Übergabe des Blisterpackungsstapels an die sich kontinuierlich bewegende Fördervorrichtung möglich ist und somit ein hoher Durchsatz erzielt werden kann.

Bei einer speziellen Ausgestaltung sind die Seitenbegrenzungselemente der Übergabekassette im Wesentlichen quer zur Förderrichtung angeordnet, und jede Übergabekassette ist auf der der Übergabekassetten-Bewegungseinheit abgewandten Seite offen. Über die offene Seite können die Blisterpackungsstapel beim Herausziehen der Übergabekassette diese verlassen, während die beiden Seitenbegrenzungselemente eine stabile senkrechte Ausrichtung der Blisterpackungsstapel zum Zeitpunkt der Übergabe sicherstellen.

Der wenigstens einen Übergabekassetten-Bewegungseinheit ist vorzugsweise eine Längsführungseinrichtung zugeordnet, entlang welcher die Übergabekassetten-Bewegungseinheit parallel zur Fördervorrichtung hin- und herbewegbar ist. Dadurch wird eine Zwangsführung in Längsrichtung realisiert, die dauerhaft eine präzise Bewegung der Übergabekassette parallel zur Fördervorrichtung ermöglicht.

Zusätzlich ist die wenigstens eine Übergabekassetten-Bewegungseinheit mit eine rungseinrichtung ausgestattet, entlang welcher die Übergabekassette quer zur Förderrichtung hin- und herbewegbar ist. Dadurch ist wiederum eine präzise Festlegung der Querbewegungskomponente der Übergabekassette gewährleistet.

Die Übergabekassetten-Bewegungseinheit ist vorzugsweise derart angesteuert, dass die Bewegung der Übergabekassetten-Bewegungseinheit entlang der Längsführungseinrichtung und die Bewegung der Übergabekassette entlang der Querführungseinrichtung unabhängig voneinander erfolgen. Durch eine entsprechende Ansteuerung der Längs- und Querbewegungen der Übergabekassetten ist eine individuelle Anpassung an die geometrischen Gegebenheiten der Fördervorrichtung möglich.

Mit der Bereitstellung von insgesamt zwei Übergabekassetten mit jeweiligen Übergabekassetten-Bewegungseinheiten, die jeweils auf gegenüberliegenden Seiten der Fördervorrichtung angeordnet sind, kann der Gesamtdurchsatz der Übergabevorrichtung verdoppelt werden.

Die Bewegungen der beiden Übergabekassetten von der Aufnahmeposition zur Abgabeposition und zurück zur Aufnahmeposition definieren jeweils einen Zyklus. Dabei sind die Übergabekassetten-Bewegungseinheiten derart steuerbar, dass die beiden Übergabekassetten gegenläufige Bewegungen ausführen, die um einen halben Zyklus zeitlich versetzt sind. Somit ist es möglich, dass die beiden Übergabekassetten abwechselnd in derselben Aufnahmeposition angeordnet werden können und lediglich eine einzige Stapelbildungsstation benötigt wird.

Schließlich erfolgen alle Bewegungen der Übergabekassette in einer Ebene, die parallel zur Förderrichtung der Fördervorrichtung ist, die insbesondere eine horizontale Ebene ist. Die Übergabekassetten müssen also nicht in vertikaler Richtung bewegt werden. Dadurch wird die technische Umsetzung der Vorrichtung vereinfacht.

Weitere Eigenschaften und Vorteile der vorliegenden Erfindung ergeben sich aus der nachfolgenden Beschreibung unter Bezugnahme auf die Zeichnungen.
- Fig. 1A bis 1I: sind perspektivische Ansichten einer bevorzugten Ausführungsform der erfindungsgemäßen Übergabevorrichtung, in denen die verschiedenen Phasen der Übergabebewegung einer ersten Übergabekassette und einer zweiten Übergabekassette gezeigt sind;
- Fig. 2: ist eine Seitenansicht der Übergabevorrichtung aus Fig. 1A bis 1I; und
- Fig. 3: ist eine Ansicht von oben der Übergabevorrichtung aus Fig. 1A bis 1I.

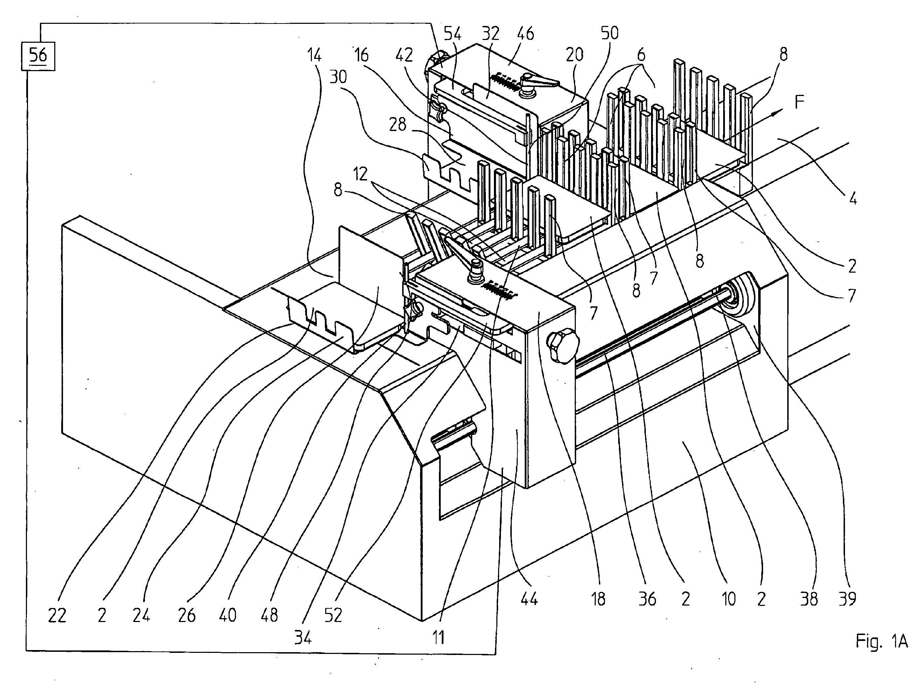

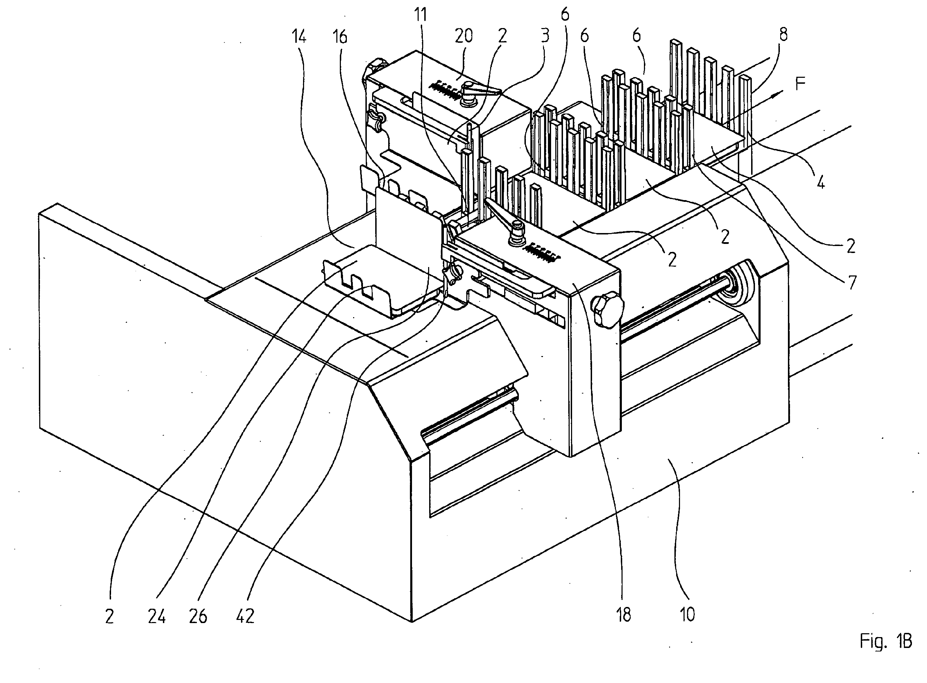

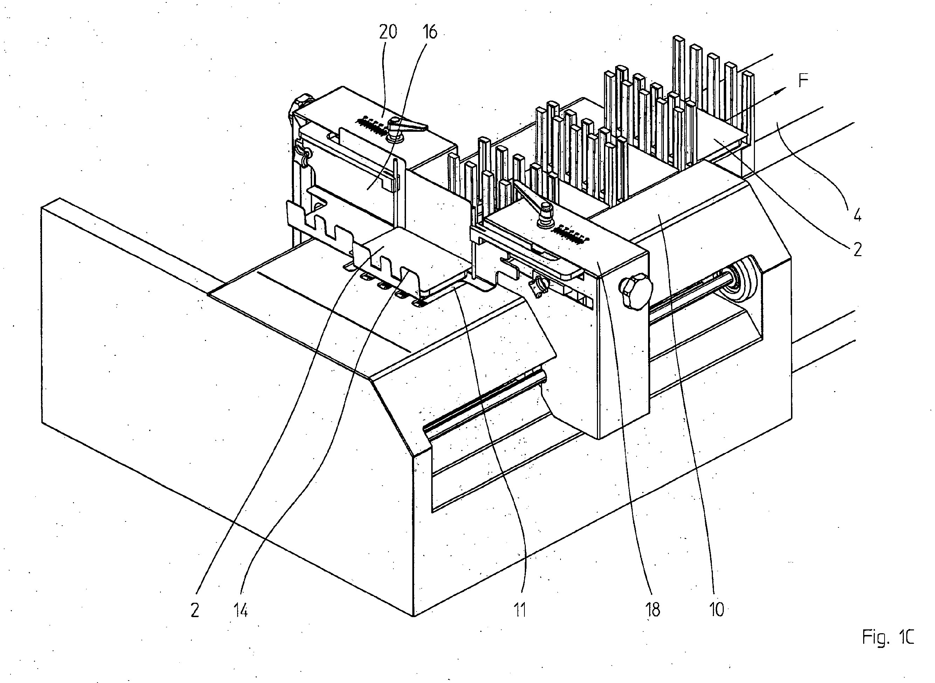

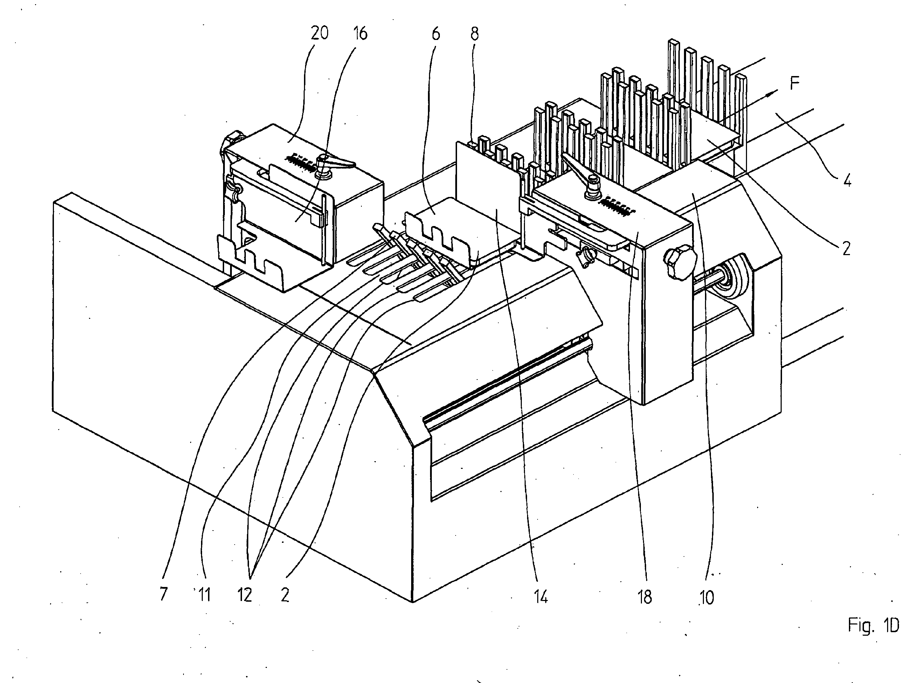

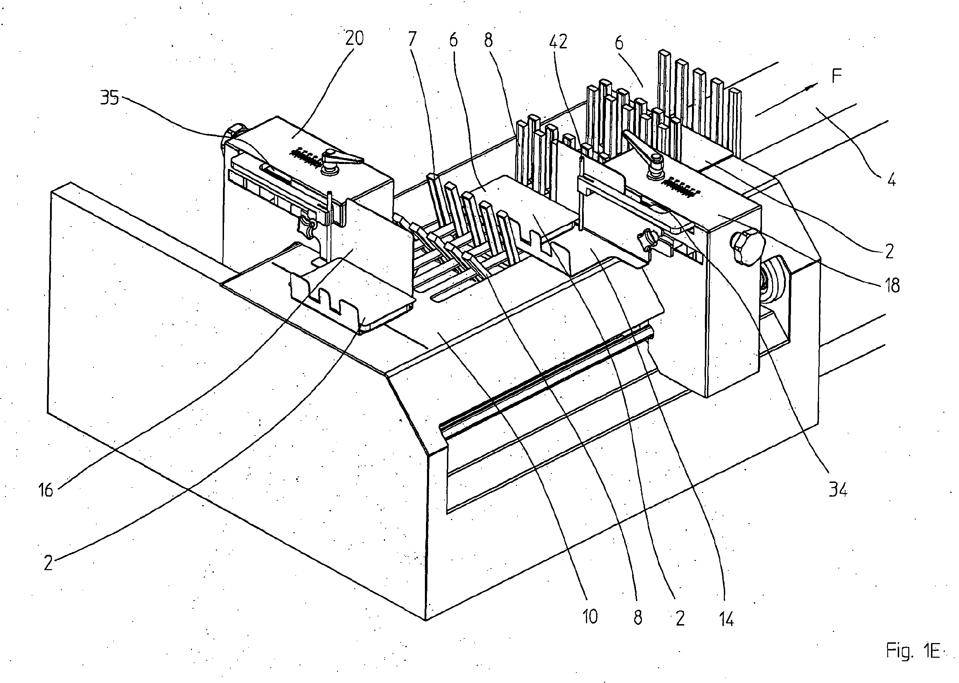

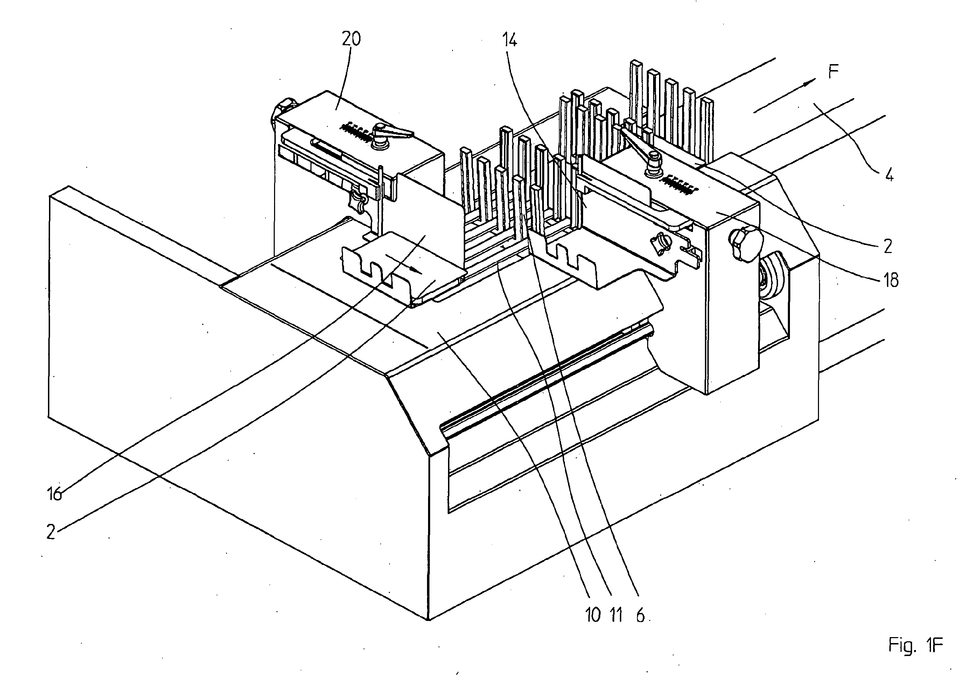

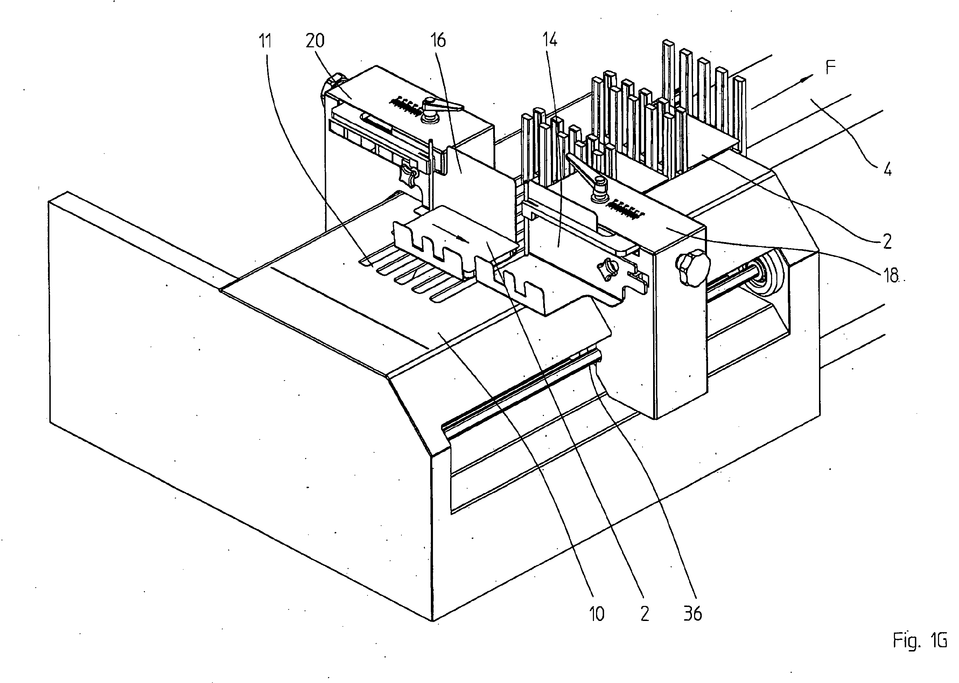

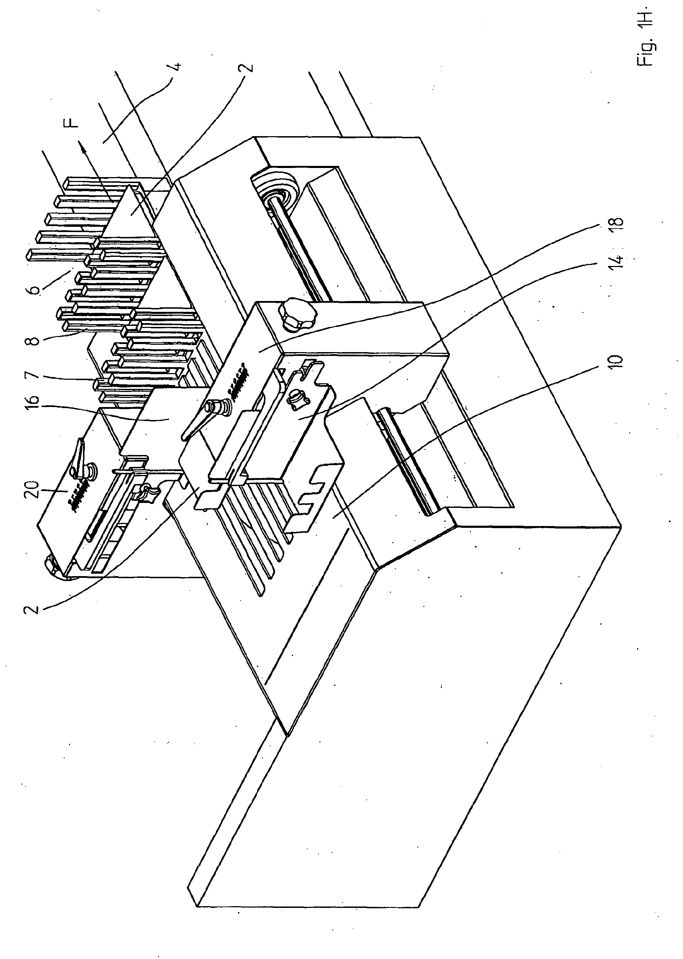

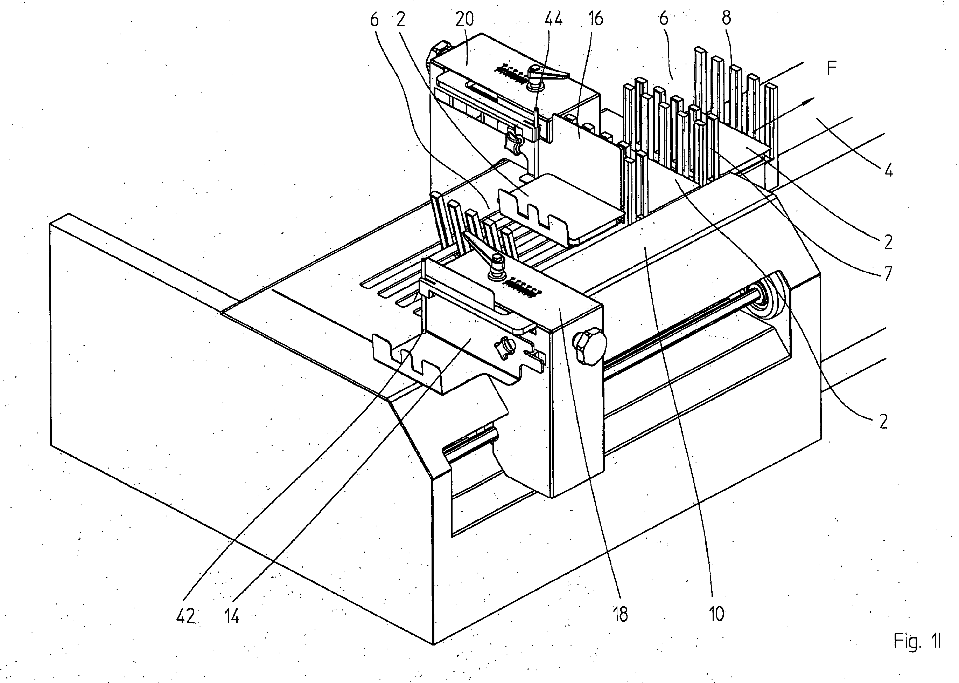

Fig. 1A zeigt eine bevorzugte Ausführungsform einer erfindungsgemäßen Vorrichtung zur Übergabe von Blisterpackungsstapeln 2 an eine Fördervorrichtung 4 zum Fördern der Blisterpackungsstapel 2 in einer Förderrichtung F. Man beachte, dass in den Darstellungen der Fig. 1 bis 3 jeder Blisterpackungsstapel 2 lediglich eine einzige Blisterpackung umfasst. Ein Blisterpackungsstapel 2 kann selbstverständlich auch mehrere übereinander angeordnete Blisterpackungen umfassen.

Die Übergabevorrichtung dient insbesondere dazu, die Blisterpackungsstapel 2, die an einer Aufnahmeposition (Fig. 1A) aufgenommen wurden, an sich in Förderrichtung F bewegende Fächer 6 der Fördervorrichtung 4 zu übergeben. Zur Bildung der Blisterpackungsstapel ist eine Stapelbildungseinheit (nicht gezeigt) vorgesehen. Um die Blisterpackungsstapel an der Aufnahmeposition in der Übergabekassette anzuordnen, ist eine Ausgabeeinheit (nicht gezeigt) vorgesehen.

Die in den Figuren gezeigte Fördervorrichtung 4 ist in Form einer Packgutförderkette ausgebildet, die mehrere Fächer 6 zur Aufnahme je eines Blisterpackungsstapels 2 aufweist. Die Fächer 6 werden jeweils durch eine hintere und eine vordere Trennwand 7, 8 quer zur Förderrichtung F gebildet. Es ist jedoch auch möglich, dass bei einer anderen Packgutförderkette zwei in Förderrichtung F benachbarte Fächer 6 lediglich durch eine einzige Trennwand voneinander getrennt sind. Im Speziellen sind die Trennwände 7, 8 als gabelartige, mehrfingrige Trennwände ausgebildet. Ebenso ist es denkbar, dass die Fördervorrichtung 4 als Linearmotor-Fördervorrichtung ausgebildet ist. In diesem Fall übernehmen einzeln ansteuerbare Wagen die Funktion der Fächer 6.

Wie darüber hinaus in Fig. 1A gezeigt, umfasst die Übergabevorrichtung ein Gehäuse 10. Das Gehäuse 10 hat eine obere Seite, an der ein Gleitabschnitt 11 ausgebildet ist, der mit der Bewegungsbahn der Blisterpackungsstapel 2 korrespondiert und der mehrere in Förderrichtung F verlaufende Schlitze 12 aufweist. Durch diese Schlitze 12 erstrecken sich wiederum die Fingerelemente der Trennwände 7, 8, um jeweils ein Fach 6 zur Aufnahme eines Blisterpackungsstapels 2 zu bilden.

Die Übergabevorrichtung umfasst zusätzlich eine erste und eine zweite Übergabekassette 14, 16 sowie eine der ersten Übergabekassette 14 zugeordnete erste Übergabekassetten-Bewegungseinheit 18 und eine der zweiten Übergabekassette 16 zugeordnete zweite Übergabekassetten-Bewegungseinheit 20. Die erste Übergabekassette 14 umfasst ein Bodenelement 22 sowie eine hintere und eine vordere Seitenbegrenzungswand 24, 26, wobei jede Seitenbegrenzungswand 24, 26 quer zur Förderrichtung F vertikal abragend an dem Bodenelement 22 angeordnet ist. Die zweite Übergabekassette 16 umfasst ein Bodenelement 28 sowie eine hintere und eine vordere Seitenbegrenzungswand 30, 32, wobei jede Seitenbegrenzungswand 30, 32 quer zur Förderrichtung F und vertikal abragend an dem Bodenelement 28 angeordnet ist. Die vorderen Seitenbegrenzungswände 26, 32 sind jeweils höher als die hinteren Seitenbegrenzungswände 24, 30 ausgebildet.

Während die Übergabekassetten 14, 16 an den zugeordneten Übergabekassetten-Bewegungseinheiten 18, 20 an jeweiligen Querführungseinrichtungen 34, 35 in Richtung quer zur Förderrichtung F verschiebbar gelagert sind, sind die Übergabekassetten-Bewegungseinheiten 18, 20 an jeweiligen Längsführungseinrichtungen 36, die an dem Gehäuse 10 vorgesehen sind, in Förderrichtung F verschiebbar gelagert. Die Übergabekassetten-Bewegungseinheiten 18, 20 sind derart längsverschiebbar gelagert, dass sie seitlich parallel zur Fördervorrichtung 4 verschiebbar sind.

Die Übergabekassetten 14, 16 sind wiederum derart an den zugeordneten Übergabekassetten-Bewegungseinheiten 18, 20 in Querrichtung verschiebbar gelagert, dass jede Übergabekassette in ein Fach 6 sowie in eine Position seitlich neben der Packgutförderkette 5 bewegbar ist. Die Längsführungseinrichtung 36 besteht aus einer Längsführungsschiene 38, die in einer Ausnehmung in einer Seitenwand des Gehäuses 10 vorgesehen ist. Jeder Übergabekassetten-Bewegungseinheit 18, 20 sind (nicht gezeigte) Servomotoren zugeordnet, die unabhängig voneinander ansteuerbar sind, um die Längs- und Querbewegungen zu bewirken.

Die Übergabekassetten-Bewegungseinheiten 18, 20 umfassen jeweils ein im Wesentlichen dreieckförmiges Gehäuse 44, 46, das seitlich des Gleitabschnitts 11 an dem Gehäuse 10 längsverschiebbar angeordnet ist. An den in Förderrichtung F betrachtet hinteren Seiten der Gehäuse 44, 46 sind die Übergabekassetten 14, 16 querverschiebbar befestigt. Darüber hinaus sind Schiebeelemente 40, 42 vorgesehen, die jeweils an den zur Förderrichtung hinteren Seiten der Gehäuse 44, 46 der Übergabekassetten-Bewegungseinheiten 18, 20 angeordnet sind. Jedes Schiebeelement 44, 46 besteht aus einem stabförmigen Element 48, 50, das mit Hilfe eines L-förmigen Befestigungsarmes 52, 54 in horizontaler Ausrichtung an der Übergabekassetten-Bewegungseinheit 18, 20 befestigt ist. Die L-förmigen Befestigungsarme 52, 54 sind in Querrichtung verstellbar an der Übergabekassetten-Bewegungseinheit 18, 20 angeordnet, so dass jedes Schiebeelement 40, 42 in verschiedenen Positionen relativ zu dem Gehäuse 44, 46 anordenbar ist.

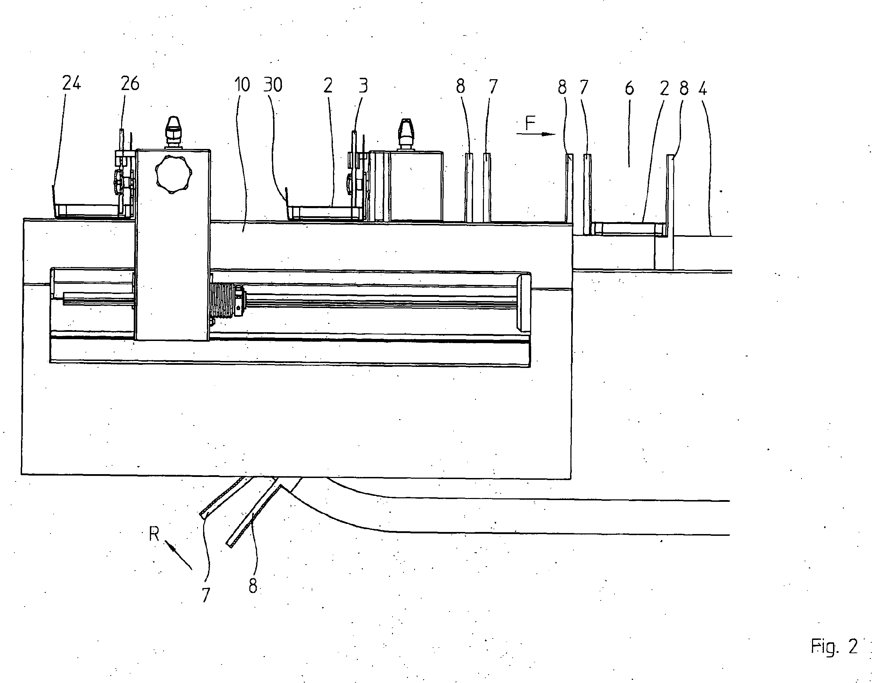

In Fig. 2 ist nur der linke Teil der sich endlos umlaufend bewegenden Fördervorrichtung 4 gezeigt. Die Fördervorrichtung 4 weist ein sich in Förderrichtung F bewegendes oberes Trum und ein sich in zur Förderrichtung F entgegengesetzten Rücklaufrichtung R bewegendes unteres Trum auf. Die mehrfingrigen Trennwände 7, 8 werden nach dem Rücklauf und zum Zeitpunkt der Richtungsumkehr an einem Umkehrpunkt durch die Längsschlitze 12 des Übergabe-Gehäuses 10 hindurch geführt, um die Fächer 6 zur Aufnahme der Blisterpackungsstapel an der Oberseite des Gehäuses 10 zu bilden. Jedes Fach 6 umfasst die hintere Trennwand 7 und die dazugehörige vordere Trennwand 8, wobei eine hintere Trennwand 7 eines vorderen Fachs 6 jeweils von der vorderen Trennwand 8 eines hinteren Fachs 6 in Förderrichtung F beabstandet ist.

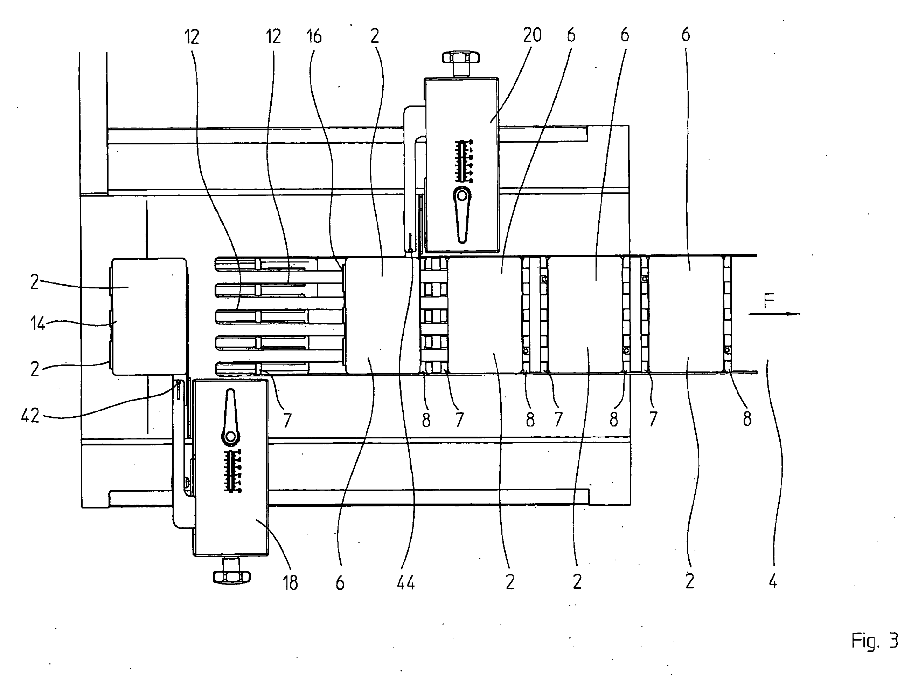

In der Draufsicht der Fig. 3 ist weiterhin gezeigt, wie die Übergabekassette 16, die durch die Übergabekassetten-Bewegungseinheit 20 in Förderrichtung bewegt wird, allmählich der vorderen Trennwand 8 des zugeordneten Fachs 6 angenähert wird, und wie sich die hintere Trennwand 7, die noch von der Übergabekassette 16 beabstandet ist, durch die Schlitze 12 hindurch bewegt wird. Wie am Beispiel der bereits in den Fächern 6 abgelegten Blisterpackungsstapel 2 zu sehen ist, befinden sich diese in enger Anlage mit den Trennwänden 7, 8. Weiterhin lässt sich durch die Fig. 3 einfach nachvollziehen, dass die beiden Übergabekassetten 14, 16 umlaufende Endlosbewegungen vollziehen. Dabei bewegt sich die erste Übergabekassette 14 im Uhrzeigersinn, während sich die zweite Übergabekassette 16 im Gegenuhrzeigersinn bewegt.

Im Folgenden wird ein Bewegungsablauf der Übergabevorrichtung, der aus den beiden Bewegungszyklen der beiden Übergabekassetten 14, 16 resultiert, anhand der Fig. 1A bis 1I näher beschrieben. Die Ansteuerung der beiden Übergabekassetten 14, 16 erfolgt über eine Steuervorrichtung 56 (Fig. 1A), die somit alle nachfolgend beschriebenen Bewegungsabläufe steuert.

In Fig. 1A befindet sich die im Bildvordergrund befindliche erste Übergabekassette 14 in einer Startposition eines Bewegungszyklus. Im vorliegenden Fall entspricht die Startposition auch der Aufnahmeposition, an der jede Übergabekassette 14, 16 mit einem Blisterpackungsstapel 2 befüllt wird. Die erste Übergabekassette 14 befindet sich in Förderrichtung betrachtet direkt hinter dem hinteren Ende der Fördervorrichtung 4. Die zweite Übergabekassette 16 befindet sich in Förderrichtung stromab der ersten Übergabekassette 14, und zwar seitlich neben der Bewegungsbahn der Fördervorrichtung 4, in der bereits ein Blisterpackungsstapel 2 abgelegt wurde.

In Fig. 1B ist zu sehen, dass - ausgehend von der in Fig. 1A gezeigten Darstellung - die erste Übergabekassette 14 bereits in Förderrichtung F weiterbewegt wurde und in etwa zur Hälfte über dem Gleitabschnitt 11 des Gehäuses 10 angeordnet ist. Die zweite Übergabekassette 16 wurde - ausgehend von der in Fig. 1A gezeigten Darstellung - entgegen der Förderrichtung F zurückbewegt.

In Fig. 1C ist zu sehen, dass - ausgehend von der in Fig. 1B gezeigten Darstellung - die Übergabekassette 14 vollständig über der Gleitfläche 11 angeordnet wurde, während die Übergabekassetten-Bewegungseinheit 20 und damit die Übergabekassette 16 entlang der (nicht gezeigten) Längsführungseineinrichtung so weit in zur Förderrichtung F entgegengesetzter Richtung bewegt wurde, dass die erste und die zweite Übergabekassette 14, 16 nebeneinander angeordnet sind.

In Fig. 1D ist zu sehen, dass - ausgehend von der in Fig. 1C gezeigten Darstellung - die beiden Übergabekassetten 14, 16 bereits aneinander vorbei bewegt wurden. Die Übergabekassette 14 ist in einem Fach 6 angeordnet, das durch eine hintere und eine vordere Trennwand 7, 8 begrenzt wird. Dabei haben sich die Fingerelemente der hinteren Trennwand 7 nur teilweise durch die Schlitze 12 hindurchbewegt und befinden sich in einer zur Gleitfläche 11 geneigten Ausrichtung. Die Übergabekassette 16 wurde - ausgehend von der in Fig. 1C gezeigten Darstellung - durch die Übergabekassetten-Bewegungseinheit 20 so weit nach hinten zurückbewegt, dass sie sich unmittelbar hinter der Gleitfläche 11, jedoch seitlich von der Bewegungsbahn der Fördervorrichtung 4 befindet.

In Fig. 1E ist zu sehen, dass - ausgehend von der in Fig. 1D gezeigten Darstellung - die Übergabekassette 14 weiter in Förderrichtung F bewegt wurde und sich die Finger der hinteren Trennwand 7 weiter in Richtung einer vertikalen Ausrichtung aufgerichtet haben. Demgegenüber hat die Übergabekassetten-Bewegungseinheit 20 eine Verschiebebewegung der Übergabekassette 16 in Querrichtung veranlasst, so dass sich nun die Übergabekassette 16 in der Startposition befindet. In dieser Startposition befindet sich die zweite Übergabekassette 16 in Förderrichtung F betrachtet direkt hinter dem hinteren Ende der Fördervorrichtung 4. Die erste Übergabekassette 14 befindet sich in Förderrichtung F stromabwärts der zweiten Übergabekassette 16 und ist bereits quer zur Förderrichtung teilweise aus dem Fach 6 der Fördervorrichtung 4 herausgezogen, wobei der Blisterpackungsstapel 2 durch das Schiebeelement 42 in dem Fach 6 zurückgehalten wird.

In Fig. 1F ist zu sehen, dass - ausgehend von der in Fig. 1E gezeigten Darstellung - die zweite Übergabekassette 16 bereits in Förderrichtung F weiterbewegt wurde und sich in etwa zur Hälfte über dem Gleitabschnitt 11 des Gehäuses 10 befindet. Die erste Übergabekassette 14 wurde - ausgehend von der in Fig. 1E gezeigten Darstellung - entgegen der Förderrichtung F zurückbewegt.

In Fig. 1G ist zu sehen, dass - ausgehend von der in Fig. 1E gezeigten Darstellung - die zweite Übergabekassette 16 vollständig oberhalb der Gleitfläche 11 angeordnet ist, während die Übergabekassetten-Bewegungseinheit 18 und damit die erste Übergabekassette 14 entlang der Längsführungseineinrichtung 36 so weit entgegengesetzt zur Förderrichtung F bewegt wurde, dass die erste und die zweite Übergabekassette 14, 16 auf einer Höhe angeordnet sind.

In Fig. 1H ist zu sehen, dass - ausgehend von der in Fig. 1G gezeigten Darstellung - die zweite Übergabekassette 16 mit dem Blisterpackungsstapel 2 in Förderrichtung F weiterbewegt wurde und die erste Übergabekassette 14 entgegengesetzt zur Förderrichtung F weiterbewegt wurde.

In Fig. 1I ist zu sehen, dass - ausgehend von der in Fig. 1H gezeigten Darstellung - die zweite Übergabekassette 16 mit dem Blisterpackungsstapel 2 in Förderrichtung F weiterbewegt wurde und die erste Übergabekassette 14 entgegengesetzt zur Förderrichtung F weiterbewegt wurde.

Die erste Übergabekassette 14 kann nun von der in Fig. 1I gezeigten Position quer zur Förderrichtung F zum Befüllen mit einem Blisterpackungsstapel 2 in die Startposition bewegt werden. Die zweite Übergabekassette 16 kann von der in Fig. 1I gezeigten Position quer zur Förderrichtung aus dem Fach 6 herausbewegt werden, wobei der Blisterpackungsstapel 2 an dem Schiebeelement 44 anliegt und folglich in dem Fach 6 verbleibt. Damit ist ein vollständiger Bewegungsablauf der Übergabevorrichtung erfolgt und die Übergabekassetten 14, 16 befinden sich wieder in den in Fig. 1A gezeigten Positionen.

Neben der konkret abgebildeten Ausführungsform sind viele Variationen der vorliegenden Erfindung möglich. Beispielsweise kann nur eine Übergabekassette 14 bzw. 16 vorgesehen sein. Auch die konkrete geometrische Ausgestaltung der Übergabekassetten 14, 16 und des Schiebeelements 40, 42 sowie deren Antriebs- und Führungseinrichtungen kann vom Fachmann variiert werden.

## Patentansprüche

1. Vorrichtung mit Übergabevorrichtung und Fördervorrichtung (4), wobei die Übergabevorrichtung zur Übergabe von Blisterpackungsstapeln an die Fördervorrichtung (4) dient, und wobei die Fördervorrichtung (4) mehrere sich umlaufend bewegende Fächer (6) oder Wagen zur Aufnahme der Blisterpackungsstapel (2) hat und zum Fördern der Blisterpackungsstapel (2) in einer Förderrichtung (F) dient,
wobei die Übergabevorrichtung wenigstens eine Übergabekassette (14, 16) zum Aufnehmen eines Blisterpackungsstapels (2) aufweist, die ein Bodenelement (22, 28) und wenigstens zwei gegenüberliegende Seitenbegrenzungselemente (24, 26; 30, 32) aufweist, und wenigstens eine Übergabekassetten-Bewegungseinheit (18, 20) zum Bewegen der Übergabekassette (14, 16) in einer Richtung quer zur Förderrichtung (F), die von einer Steuervorrichtung (56) angesteuert ist,
wobei die Übergabekassetten-Bewegungseinheit (18, 20) derart angesteuert ist, dass die Übergabekassette (14, 16) von einer Aufnahmeposition, an der sie mit Blisterpackungen (2) gefüllt wird, zu einer Abgabeposition, an der die Blisterpackungen (2) in ein Fach (6) oder einen Wagen der Fördervorrichtung (4) übergeben werden, bewegt wird,
**dadurch gekennzeichnet, dass**
die Übergabekassetten-Bewegungseinheit (18, 20) derart angesteuert ist, dass die Übergabekassette (14, 16) auch in Förderrichtung (F) bewegt wird, und
die Übergabekassette (14, 16) von der Abgabeposition in Richtung quer zur Förderrichtung (F) aus dem Fach (6) oder dem Wagen der Fördervorrichtung (4) seitlich heraus bewegt wird, während der Blisterpackungsstapel (2) auf der Fördervorrichtung (4) verbleibt.

2. Vorrichtung nach Anspruch 1, **dadurch gekennzeichnet, dass** ein Anschlagelement vorgesehen ist, gegen das der Blisterpackungsstapel (2) anliegt, um diesen in dem Fach (6) oder dem Wagen zurückzuhalten, wenn die Übergabekassette (14, 16) seitlich aus der Fördervorrichtung (4) herausbewegt wird.

3. Vorrichtung nach Anspruch 2, **dadurch gekennzeichnet, dass** das Anschlagelement als bewegbares Schiebeelement (40, 42) ausgebildet ist, das an der Übergabekassetten-Bewegungseinheit (18, 20) angeordnet ist.

4. Vorrichtung nach einem der vorhergehenden Ansprüche, **dadurch gekennzeichnet, dass** die Übergabekassetten-Bewegungseinheit (18, 20) derart angesteuert ist, dass die Übergabekassette (14, 16) bei der Bewegung von der Aufnahmeposition zur Abgabeposition in Förderrichtung (F) der Fördervorrichtung (4) bewegt wird.

5. Vorrichtung nach einem der vorhergehenden Ansprüche, **dadurch gekennzeichnet, dass** die Übergabekassetten-Bewegungseinheit (18, 20) derart ausgestaltet ist, dass die Übergabekassette (14, 16), nach dem Herausbewegen aus dem Fach (6) oder dem Wagen quer zur Förderrichtung (F), zunächst in einer zur Förderrichtung (F) entgegengesetzten Richtung bewegt wird und anschließend in Richtung quer zur Förderrichtung (F) in die Aufnahmeposition bewegt wird.

6. Vorrichtung nach einem der vorhergehenden Ansprüche, **dadurch gekennzeichnet, dass** es sich bei der Bewegung der Übergabekassette (14, 16) von der Aufnahmeposition zur Übergabeposition und zurück zur Aufnahmeposition um eine umlaufende Endlosbewegung handelt.

7. Vorrichtung nach einem der vorhergehenden Ansprüche, **dadurch gekennzeichnet, dass** es sich bei der Bewegung zum seitlichen Herausziehen der Übergabekassette (14, 16) aus der Fördervorrichtung (4) um eine kombinierte Bewegung handelt, die sich aus der Bewegung in Förderrichtung (F) und aus der Bewegung quer zur Förderrichtung (F) zusammensetzt.

8. Vorrichtung nach einem der vorhergehenden Ansprüche, **dadurch gekennzeichnet, dass** die Seitenbegrenzungselemente (24, 26; 30, 32) der Übergabekassette (14, 16) im Wesentlichen quer zur Förderrichtung (F) angeordnet sind.

9. Vorrichtung nach einem der vorhergehenden Ansprüche, **dadurch gekennzeichnet, dass** jede Übergabekassette (14, 16) auf der der Übergabekassetten-Bewegungseinheit (18, 20) abgewandten Seite offen ist.

10. Vorrichtung nach einem der vorhergehenden Ansprüche, **dadurch gekennzeichnet, dass** der wenigstens einen Übergabekassetten-Bewegungseinheit (18, 20) eine Längsführungseinrichtung (36) zugeordnet ist, entlang welcher die Übergabekassetten-Bewegungseinheit (18, 20) parallel zur Förderrichtung (F) hin- und herbewegbar ist.

11. Vorrichtung nach einem der vorhergehenden Ansprüche, **dadurch gekennzeichnet, dass** die wenigstens eine Übergabekassetten-Bewegungseinheit (18, 20) eine Querführungseinrichtung (34, 35) aufweist, entlang welcher die Übergabekassette (14, 16) quer zur Förderrichtung (F) hin- und herbewegbar ist.

12. Vorrichtung nach Anspruch 11, **dadurch gekennzeichnet, dass** die Übergabekassetten-Bewegungseinheit (18, 20) derart angesteuert ist, dass die Bewegung der Übergabekassetten-Bewegungseinheit (18, 20) entlang der Längsführungseinrichtung (36) und die Bewegung der Übergabekassette (14, 16) entlang der Querführungseinrichtung (34, 35) unabhängig voneinander erfolgen.

13. Vorrichtung nach einem der vorhergehenden Ansprüche, **dadurch gekennzeichnet, dass** insgesamt zwei Übergabekassetten (14, 16) mit jeweiligen Übergabekassetten-Bewegungseinheiten (18, 20) vorgesehen sind, die jeweils auf gegenüberliegenden Seiten der Fördervorrichtung (4) angeordnet sind.

14. Vorrichtung nach Anspruch 13, **dadurch gekennzeichnet, dass** die Bewegungen der beiden Übergabekassetten (14, 16) von der Aufnahmeposition zur Abgabeposition und zurück zur Aufnahmeposition jeweils einen Zyklus definieren, und die Übergabekassetten-Bewegungseinheiten (18, 20) derart steuerbar sind, dass die beiden Übergabekassetten (14, 16) gegenläufige Bewegungen ausführen, die um einen halben Zyklus zeitlich versetzt sind.

15. Vorrichtung nach Anspruch 13 oder 14, **dadurch gekennzeichnet, dass** alle Bewegungen der Übergabekassetten (14, 16) in einer Ebene erfolgen, die parallel zur Förderrichtung (F) der Fördervorrichtung (4) ist, und die insbesondere eine horizontale Ebene ist.

## Claims

1. A device having a transfer device and a conveying device (4), the transfer device serving to transfer stacks of blister packs to the conveying device (4); wherein the conveying device (4) has several compartments or carts (6), travelling around in a circuit, for holding the stacks of blister packs (2), and serves to convey the stacks of blister packs (2) in a conveying direction (F),
wherein the transfer device comprises at least one transfer cassette (14, 16) for holding one of the stacks of blister packs (2) comprising a bottom element (22, 28) and at least two opposing side boundary elements (24, 26; 30, 32) and further comprises at least one transfer cassette motion unit (18, 20), actuated by a control unit (56), for moving the transfer cassette (14, 16) in a direction transverse to the conveying direction (F),
wherein the transfer cassette motion unit (18, 20) is actuated in such a way that the transfer cassette (14, 16) is moved from a loading position, in which it is loaded with blister packs (2), to an unloading position, in which the blister packs (2) are transferred to one of the compartments (6) or carts of the conveying device (4),
**characterised in that**
the transfer cassette motion unit (18, 20) is actuated in such a way that the transfer cassette (14, 16) is also moved in the conveying direction (F), and
the transfer cassette (14, 16) is moved laterally out of the compartment (6) or the cart of the conveying device (4) and thus out of the unloading position in the direction transverse to the conveying direction (F), whereas the stack of blister packs (2) remains on the conveying device (4).

2. The device according to claim 1, **characterised in that** a stop element is provided, against which the stack of blister packs (2) rests, so that the latter is retained in the compartment (6) or cart, when the transfer cassette (14, 16) is moved laterally out of the conveying device (4).

3. The device according to claim 2, **characterised in that** the stop element is a movable pusher element (40, 42), which is arranged on the transfer cassette motion unit (18, 20).

4. The device according to any one of the preceding claims, **characterised in that** the transfer cassette motion unit (18, 20) is actuated in such a way that the transfer cassette (14, 16) is moved from the loading position to the unloading position in the conveying direction (F) of the conveying device (4).

5. The device according to any one of the preceding claims, **characterised in that** the transfer cassette motion unit (18, 20) is designed in such a way that, after the transfer cassette (14, 16) has been moved out of the compartment (6) or cart transversely to the conveying direction (F), it is moved first in a direction opposite to the conveying direction (F) and then in a direction transverse to the conveying direction (F) into the loading position.

6. The device according to any one of the preceding claims, **characterised in that** the movement of the transfer cassette (14, 16) from the loading position to the unloading position and back to the loading position is an endlessly repeated movement around a circuit.

7. The device according to any one of the preceding claims, **characterised in that** the movement producing a lateral removal of the transfer cassette (14, 16) from the conveying device (4) is a combination movement, which is composed of a movement in the conveying direction (F) and a movement transverse to the conveying direction (F).

8. The device according to any one of the preceding claims, **characterised in that** the side boundary elements (24, 26; 30, 32) of the transfer cassette (14, 16) are arranged substantially transversely to the conveying direction (F).

9. The device according to any one of the preceding claims, **characterised in that** each transfer cassette (14, 16) is open on the side facing away from the transfer cassette motion unit (18, 20).

10. The device according to any one of the preceding claims, **characterised in that** a longitudinal guide device (36) is assigned to the transfer cassette motion unit (18, 20), along which guide device the transfer cassette motion unit (18, 20) can be moved back and forth parallel to the conveying direction (F).

11. The device according to any one of the preceding claims, **characterised in that** the at least one transfer cassette motion unit (18, 20) comprises a transverse guide device (34, 35), along which the transfer cassette (14, 16) can be moved back and forth transversely to the conveying direction (F).

12. The device according to claim 11, **characterised in that** the transfer cassette motion unit (18, 20) is actuated in such a way that a movement of the transfer cassette motion unit (18, 20) along the longitudinal guide device (36) and a movement of the transfer cassette (14, 16) along the transverse guide device (34, 35) proceed independently of each other.

13. The device according to any one of the preceding claims, comprising two transfer cassettes (14, 16) and further comprising two cassette motion units (18, 20), which are arranged on opposite sides of the conveying device (4).

14. The device according to claim 13, **characterised in that** the movements of the two transfer cassettes (14, 16) from the loading position to the unloading position and back to the loading position define a cycle, and the transfer cassette motion units (18, 20) can be controlled in such a way that the two transfer cassettes (14, 16) execute opposite movements which are offset in time from each other by half a cycle.

15. The device according to claim 13 or 14, **characterised in that** all movements of the transfer cassettes (14, 16) take place in a plane, in particular a horizontal plane, which is parallel to the conveying direction (F) of the conveying device (4).

## Revendications

1. Dispositif comprenant un dispositif de transfert et un dispositif de transport (4), dans lequel le dispositif de transfert sert à transférer des piles d'emballages blister au dispositif de transport (4), et dans lequel le dispositif de transport (4) comprend plusieurs compartiments (6) ou chariots se déplaçant en rotation, servant à recevoir les piles d'emballages blister (2), et sert à transporter des piles d'emballages blister (2) dans une direction de transport (F),
dans lequel le dispositif de transfert présente au moins une cassette de transfert (14, 16) servant à recevoir une pile d'emballages blister (2), laquelle présente un élément côté sol (22, 28) et au moins deux éléments de délimitation latérale (24, 26 ; 30, 32) se faisant face, ainsi qu'au moins une unité de déplacement de cassettes de transfert (18, 20) servant à déplacer la cassette de transfert (14, 16) dans une direction de manière transversale par rapport au sens de transport (F), laquelle unité est pilotée par un dispositif de commande (56),
dans lequel l'unité de déplacement de cassettes de transfert (18, 20) est pilotée de telle manière que la cassette de transfert (14, 16) est déplacée d'une position de réception, au niveau de laquelle elle est remplie d'emballages blister (2), à une position de distribution, au niveau de laquelle les emballages blister (2) sont transférés dans un compartiment (6) ou dans un chariot du dispositif de transport (4),
**caractérisé en ce que**
l'unité de déplacement de cassettes de transfert (18, 20) est pilotée de telle manière que la cassette de transfert (14, 16) est déplacée également dans le sens de transport (F), et
la cassette de transfert (14, 16) est déplacée depuis la position de distribution, dans une direction de manière transversale par rapport au sens de transport (F), de manière à sortir latéralement du compartiment (6) ou du chariot du dispositif de transport (4), tandis que la pile d'emballages blister (2) reste sur le dispositif de transport (4).

2. Dispositif selon la revendication 1, **caractérisé en ce qu'**un élément de butée est prévu, contre lequel la pile d'emballages blister (2) repose afin de la retenir dans le compartiment (6) ou le chariot lorsque la cassette de transfert (14, 16) est déplacée de manière à sortir latéralement du dispositif de transport (4).

3. Dispositif selon la revendication 2, **caractérisé en ce que** l'élément de butée est réalisé sous la forme d'un élément de glissement (40, 42) prouvant être déplacé, lequel est disposé au niveau de l'unité de déplacement de cassettes de transfert (18, 20).

4. Dispositif selon l'une quelconque des revendications précédentes, **caractérisé en ce que** l'unité de déplacement de cassettes de transfert (18, 20) est pilotée de telle manière que la cassette de transfert (14, 16) est déplacée, lors du déplacement depuis la position de réception en direction de la position de distribution, dans la direction de transport (F) du dispositif de transport (4).

5. Dispositif selon l'une quelconque des revendications précédentes, **caractérisé en ce que** l'unité de déplacement de cassettes de transfert (18, 20) est configurée de telle manière que la cassette de transfert (14, 16) est déplacée, après le déplacement visant à sortir du compartiment (6) ou du chariot de manière transversale par rapport à la direction de transport (F), dans un premier temps dans une direction opposée à la direction de transport (F) puis est déplacée dans une direction de manière transversale par rapport à la direction de transport (F) dans la position de réception.

6. Dispositif selon l'une quelconque des revendications précédentes, **caractérisé en ce que** le déplacement de la cassette de transfert (14, 16) depuis la position de réception en direction de la position de transfert puis, en sens inverse à nouveau en direction de la position de réception est un déplacement sans fin en rotation.

7. Dispositif selon l'une quelconque des revendications précédentes, **caractérisé en ce que** le déplacement visant à extraire latéralement la cassette de transfert (14, 16) du dispositif de transport (4) est un déplacement combiné, qui se compose du déplacement dans la direction de transport (F) et du déplacement de manière transversale par rapport à la direction de transport (F).

8. Dispositif selon l'une quelconque des revendications précédentes, **caractérisé en ce que** les éléments de délimitation latérale (24, 26 ; 30, 32) de la cassette de transfert (14, 16) sont disposés essentiellement de manière transversale par rapport à la direction de transport (F).

9. Dispositif selon l'une quelconque des revendications précédentes, **caractérisé en ce que** chaque cassette de transfert (14, 16) est ouverte sur le côté opposé à l'unité de déplacement des cassettes de transfert (18, 20).

10. Dispositif selon l'une quelconque des revendications précédentes, **caractérisé en ce qu'**est associé à l'unité de déplacement de cassettes de transfert (18, 20) au moins au nombre de une un système de guidage longitudinal (36), le long duquel l'unité de déplacement de cassettes de transfert (18, 20) peut être déplacée selon des mouvements de va-et-vient de manière parallèle par rapport à la direction de transport (F).

11. Dispositif selon l'une quelconque des revendications précédentes, **caractérisé en ce que** l'unité de déplacement de cassettes de transfert (18, 20) présente un système de guidage transversal (34, 35), le long duquel la cassette de transfert (14, 16) peut être déplacée selon des mouvements de va-et-vient de manière transversale par rapport à la direction de transport (F).

12. Dispositif selon la revendication 11, **caractérisé en ce que** l'unité de déplacement de cassettes de transfert (18, 20) est pilotée de telle manière que le déplacement de l'unité de déplacement de cassettes de transfert (18, 20) le long du système de guidage longitudinal (36) et le déplacement de la cassette de transfert (14, 16) le long du système de guidage transversal (34, 35) s'effectuent indépendamment l'un de l'autre.

13. Dispositif selon l'une quelconque des revendications précédentes, **caractérisé en ce qu'**au total deux cassettes de transfert (14, 16) sont prévues avec respectivement des unités de déplacement de cassettes de transfert (18, 20), lesquelles sont disposées respectivement sur des côtés se faisant face du dispositif de transport (4).

14. Dispositif selon la revendication 13, **caractérisé en ce que** les déplacements des deux cassettes de transfert (14, 16) depuis la position de réception en direction de la position de distribution et à nouveau en direction de la position de réception définissent respectivement un cycle, et **en ce que** les unités de déplacement des cassettes de transfert (18, 20) peuvent être commandées de telle manière que les deux cassettes de transfert (14, 1.6) exécutent des déplacements inverses, qui sont décalés dans le temps d'un demi-cycle.

15. Dispositif selon la revendication 13 ou 14, **caractérisé en ce que** tous les déplacements des cassettes de transfert (14, 16) s'effectuent dans un plan qui est parallèle par rapport à la direction de transport (F) du dispositif de transport (4) et qui est en particulier un plan horizontal.
